# EUROPEAN PATENT APPLICATION

(11) **EP 1 275 489 A2**
(43) Date of publication of application: **15.01.2003**
(21) Application number: 02425442.7
(22) Date of filing: 05.07.2002
(51) Int. Cl.: B29C 65/02, B29D 28/00

(54) **An assembling process of pultruded section members, in particular for production of grating, netting and the like**

(30) Priority: 13.07.2001 IT MI20011498
(71) Applicant: Top Glass S.p.A., 20096 Pioltello, Milano (IT)
(72) Inventor: Branca, Alfonso, 20145 Milano (IT); Colombo, Giuseppe, 23880 Casatenovo (Lecco) (IT)
(74) Representative: Tansini, Elio Fabrizio

(57) **Abstract**

An assembling process of pultruded section members for production of grating, grids, nets and similar structures has been carried out in which at least two section members made of thermoplastic resin are moved close to each other to define a mutual-contact region. By raising the temperature to a predetermined value at least locally, melting of the connecting portion is obtained thereby accomplishing welding of the section members as a result of cooling of the structure.

## Description

The present invention relates to an assembling process for pultruded section members, in particular for production of grating, grids, nets and the like.

It is known that plastic materials reinforced with fibres such as fibreglass, carbon fibres and others have recently found an increasingly wider utilisation in the manufacture of semifinished products and products also intended for structural uses.

In particular, pultrusion is a very widespread technology for making section members having a matrix of plastic resin in which continuous reinforcing fibres, typically glass or carbon fibres, are buried.

The section member-forming processes by pultrusion typically involve the following steps: the material designed to define the reinforcement, be it made of fibreglass, carbon fibre or still other materials, is typically unwound from feeding stations in the form of continuous and parallel fibres, rowing, mat, fabric, etc., and moved forward to one or more soaking stations. The last-mentioned stations consisting of tanks for example, in which the necessary amount of a resin in the liquid state is present, continuously receive the fibres that being plunged into the soaking tank or tanks are impregnated with the plastic resin. Typically, downstream of, or in cooperation with said soaking tanks resin-adjusting stations are provided which consist of wringing rollers for example or other similar devices, designed to eliminate the excess resin from the soaked fibre.

The conveniently soaked material thus moves to a section member-forming station defining at least one passage port the cross-sectional shape of which matches that of the section member that is wished to be made. At the forming station appropriate means is provided for at least partly cross-linking the workpiece moving forward so as to give the latter a structural stability.

Downstream of the forming and cross-linking station, pulling means is present which is adapted to draw the workpiece towards possible transverse-cutting stations where the section member is converted into longitudinal elements of predetermined length.

As it is apparent, for the purpose of obtaining a manufactured article of good quality both from a structural and an aesthetical point of view it is necessary that during the soaking step the resin in the liquid state should be able to perfectly and uniformly impregnate the fibre because possible unevennesses would result in consequent problems of non-homogeneity on the finished product, separation between the plastic matrix and fibrous structure, weak resistance of the product, unaesthetical appearance, etc.

Presently, for the purpose of ensuring an appropriate impregnation of the fibre, thermosetting resins are used that in the liquid state have physico-chemical features capable of wetting and impregnating the fibrous material in an optimal manner. These resins will constitute the matrix of the workpiece that, passing through the forming station, due to the action of heat and/or appropriate catalysts, reactive hardening agents or radiations, is submitted to a chemical cross-linking reaction bringing the liquid resin to a hardened state in an irreversible manner in which the thermosetting resin cannot be subjected to softening by thermal effect any longer.

Taking into account the above highlighted feature concerning the capability of thermosetting resins to initially appear in a liquid state in which they conveniently impregnate the textile structure, the low cost of the products obtained by pultrusion of thermosetting resins, and also the fact that pultruded products are very strong and typically are not subjected to reductions in their mechanical performance until they reach their decomposition temperature, pultruded products having a thermosetting-base matrix have had a wide spread for the most varying uses: piping, beams, raceways for cables, contours of different kinds, grating structures such as grids and the like, etc.

Is should be noted however that if the above described pultruded section members are to be used to make complex products, assembling steps are required during which the different section members suitably cut in a transverse direction are set together by gluing, bolting, rivetting, mechanical couplings of different kinds, etc.

Therefore mechanical working operations are required to be carried out on the section members in order to obtain undercuts or openings for insertion of the connecting elements or portions of other section members to be mutually joined. All these operations obviously give rise to a great waste in terms of time for assembling the section members which will bring about high costs although unsatisfactory products are often obtained. In fact it is clear that where many section members are to be assembled to make complex structures, arduous working operations are often required that can also involve structural weakening in the section member and therefore will impair the overall performance of the product.

It is also apparent that assembling pultruded section members by use of glues or mechanical coupling prevents products of high complexity from being made due to clear assembling complications that these operations would involve, so that the contemplated uses of pultruded products become limited.

Finally, is should be pointed out that at all events the possibility of modifying the sectional shape of the pultruded product and consequently of the manufactured articles resulting from assembling of these section members, is very limited.

Under this situation, it is a fundamental aim of the present invention to provide an assembling process for pultruded section members capable of substantially obviating all the mentioned drawbacks.

In particular it is an aim of the invention to provide a new process specifically intended for producing grids and similar structures which is cheap and of easy manufacture.

It is a specific aim of the invention to provide a new process in which assembling of the pultruded section members is made much simpler and times and costs for the different assembling operations are reduced, without on the other hand giving rise to any deterioration in the quality of the obtained final product.

It is a further aim of the invention to provide a new assembling process enabling assembled products of better quality to be obtained which are substantially devoid of structural discontinuity and weakened points.

The foregoing and further aims that will become more apparent in the course of the following disclosure are substantially achieved by an assembling process of pultruded section members as set out in the appended claim 1.

Further features and advantages will become more apparent from the detailed description of some preferred but not exclusive embodiments of an assembling process for pultruded section members, in particular for production of grating, netting, grids and the like, in accordance with the invention.

This description will be given hereinafter with reference to the accompanying drawings given by way of non-limiting example, in which:
- Fig. 1 is a diagrammatic view concerning a plant for carrying out an assembling process in accordance with the present invention;
- Fig. 2 is a perspective view showing a plurality of section members disposed in side by side relationship with each other during a step of the process of the invention;
- Fig. 3 is a diagrammatic cross-section relating to the section members in Fig. 2 inserted in a mould in accordance with a further step of the process of the invention;
- Fig. 4 is a grating obtained after extraction from the mould referred to in Fig. 3;
- Fig. 5 is an initial step concerning a possible variant of the assembling process in accordance with the invention;
- Fig. 6 is a diagrammatic view of a further assembling step of the process in Fig. 5;
- Fig. 7 is a fragmentary perspective view of one of the final steps of the process referred to in Figs. 5 and 6.

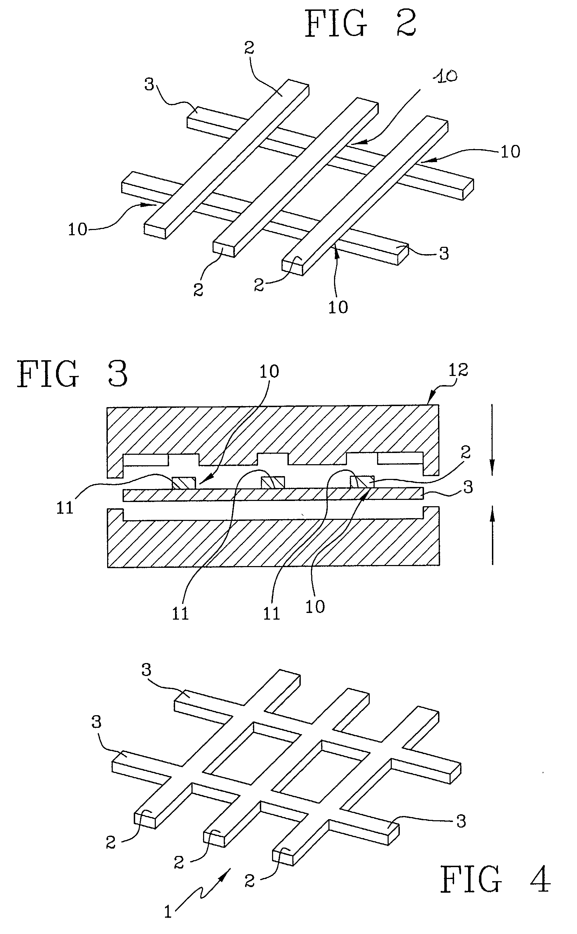

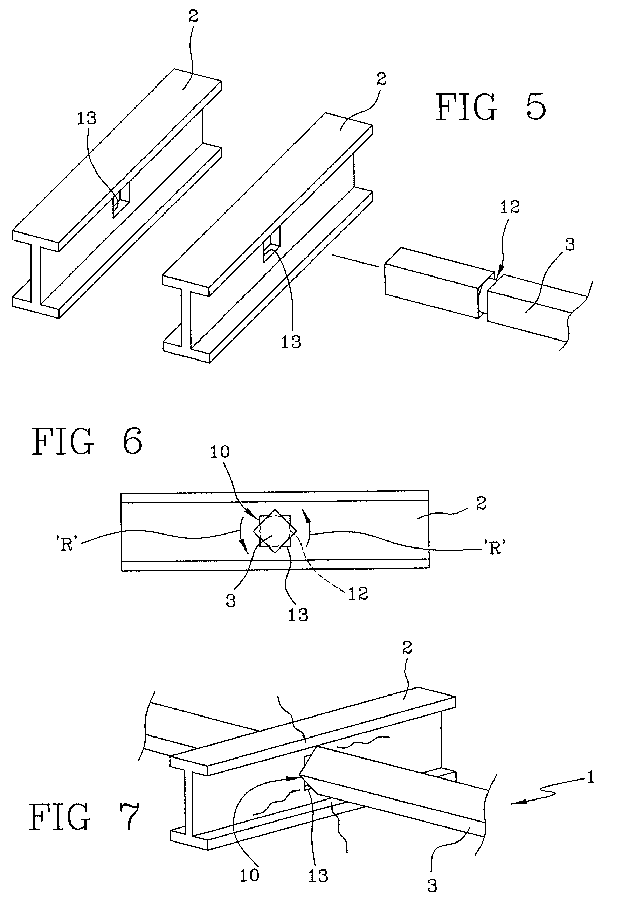

With reference to the drawings, a grating or netting to be obtained with the assembling process of pultruded section members in accordance with the present invention has been generally identified by reference numeral 1. In particular, shown in Fig. 4 is a first type of grid obtainable with an assembling process in accordance with the invention while a second possible grid-like structure still denoted at 1 and also obtainable with an assembling process in accordance with the invention., is shown in Fig. 7.

While in the embodiments shown in the drawings products such as grids are shown, the assembling process of pultruded section members in accordance with the invention clearly can be also used for construction of structures of different nature and for the most varying uses, in particular in those cases in which two or more section members previously obtained by pultrusion are required to be connected with each other.

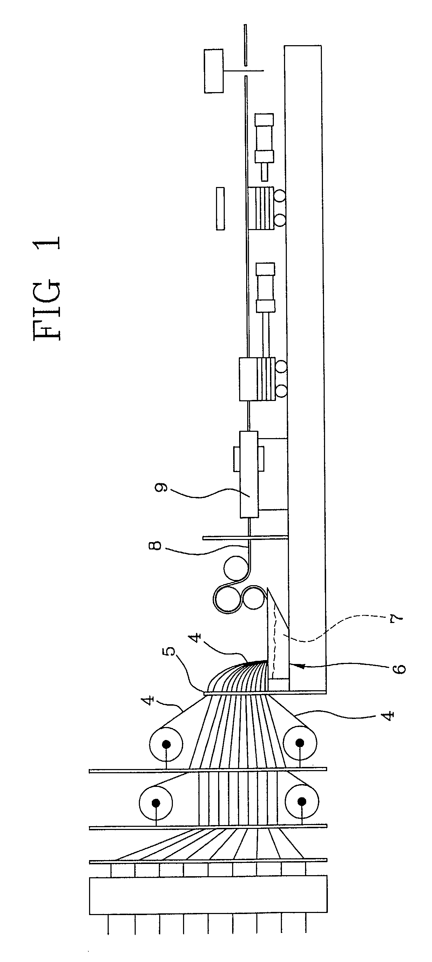

Describing the different steps of the process of the invention in more detail, it is to be noted that first of all it is necessary to arrange at least one first and one second section members 2, 3 ready for a subsequent assembling step. The section members of the invention, as already pointed out, are manufactured by pultrusion. As diagrammatically shown in Fig. 1, according to this technology the reinforcing fibres 4 made of glass fibres, carbon fibres, aramidic fibres or fibres of other nature, are fed from a supply station 5 to a soaking station 6. It should be pointed out that said typically continuous fibres may consist of parallel fibres, shaped fibres, mats, fabrics or structures of other geometry that can be conveniently used in pultrusion processes.

The fibre reaching the soaking station 6 is wetted with a plastic resin 7 to form a conveniently soaked fibrous structure 8 that will subsequently reach the forming head 9 where the workpiece takes the desired cross sectional configuration defining a section member of plastic material reinforced with fibres. From a manufacturing point of view it is to be noted that the soaking station 6 and forming head 9 can be separated from each other or consist of a single assembly from which the section member emerges provided with the necessary structural stability. In accordance with the invention the section members designed to be assembled by the described process have a plastic matrix of thermoplastic resin 7 that in the soaking station 6 is in the liquid state so that it conveniently wets the reinforcing fibre 4; on coming out of the forming head 9, the thermoplastic resin 7 solidifies taking the necessary structural stability. When forming of the continuous section member in accordance with the above described art has been completed, a transverse cutting is carried out so as to obtain section members of the desired length. Provision may be made either for several pultrusion lines in parallel or also for a single line in which the forming head 9 is equipped with several ports so as to enable simultaneous production of different section members. Once the first and second section members 2, 3 to be assembled are obtained in accordance with the just described art, these section members are moved close to each other to define at least one region of mutual contact 10. At this point since a connection between the two elements 2, 3 is to be made, a general temperature rise or a temperature rise at least localized at the region of mutual contact 10 of the two section members 2, 3 is caused, so as to reach a predetermined temperature T₁ at which at least one connecting portion 11 of at least one of said section members 2, 3 changes to the fluid state by virtue of the thermoplastic structure of which the pultruded section member has been advantageously made (see Figs. 2, 3 and 7). At this point it is sufficient to bring the connecting portion 11 back from the fluid state to the solid state, by cooling for example, to obtain welding and assembling of the pultruded section members 2, 3 at their region of mutual contact 10. From a practical point of view, the section members to be assembled are typically arranged and set within a mould 12 so that they appear conveniently positioned and in mutual contact at the region where connection is wished to be made. At this point closure of the mould is carried out and the temperature existing within the mould itself is raised until said temperature T₁ is reached at which typically the thermoplastic matrices of both the section members change to the fluid or liquid state and they penetrate into each other.

By subsequent cooling of the mould, a new solidification of the previously melted resins is obtained thereby accomplishing assembling of the pultruded section members 2, 3 at the region of mutual contact 10. Afterwards the mould can be opened to enable extraction of the assembled section members (Figs. 3 and 4).

Practically, assembling of the different section members is advantageously obtained by utilizing the thermoplastic properties of the selected resins in order to define the thermoplastic matrices of the section members to be assembled.

From this point of view it is to be noted that should thermoplastic resins identical with each other be selected for making the different section members, a really excellent welding and assembling, from a qualitative point of view, between the different parts would be achieved, thereby giving rise to a practically monolithic final product (see Fig. 3, for example) in which from the one hand continuity of the resinous matrix is obtained and, on the other hand, an appropriate arrangement in preferential and previously set directions of the reinforcing fibres is achieved.

It should be also pointed out that the process in accordance with the invention reaches an optimal assembling of the different section members when each of the latter is formed with matrices of thermoplastic resin. From a theoretical point of view it is however possible that only one of the two section members to be assembled should be made of thermoplastic resin whereas the other will be conventionally formed with a thermosetting matrix, for example.

In this case it is apparent that only the resin of the section member in a thermoplastic matrix will be able to change to the fluid state to carry out a connection with the contact region 10 provided on the other section member; is it also obvious that the temperature T₁ to which the resin of the thermoplastic matrix of the first section member can be brought to a fluid or melting phase must be lower than the temperature of thermal collapse of the thermosetting resin defining the matrix of the second section member.

In accordance with a further aspect of the invention, it is to be noted that the thermoplastic resin of the section member/s to be assembled is preferably selected from resins susceptible of cross-linking, i.e. resins adapted to take the structure and behaviour of a thermosetting resin by cross-linking; for instance a resin from the phenolic resins can be selected.

If resins of such a type are selected, i.e. crosslinkable thermoplastic resins such as novolacs, a cross-linking step may be provided to convert the matrices of thermoplastic resin of the section members into corresponding matrices of thermosetting resin. Taking into account the nature of the assembling process, it is clear that this cross-linking step is carried out after the temperature-rise step and the step involving welding by melting of the connecting portions 11 of the different section members 2, 3 to be assembled.

From a practical point of view the cross-linking step of the thermoplastic resin constituting the matrix of the different section members to be assembled may take place by thermal rise too to a temperature T₂ higher than the temperature T₁ required for bringing the thermoplastic matrix to the fluid phase; an appropriate cross-linking agent may be provided to be associated with the plastic resin of the thermoplastic type, which agent is capable of intervening to cause a cross-linking action at temperature T₂, so that by progressive temperature rise, there is occurrence both of conversion into the fluid state of the thermoplastic resin 7 as required for carrying out connection of the different section members 2, 3 at the contact regions 10, and of a subsequent cross-linking bringing the resins to the state of thermosetting resins. Due to this type of process it is practically possible to obtain a perfect assembling so that practically monolithic bodies are obtained through assembling of the different section members 2, 3 that at the end of the process even have a thermosetting matrix.

Unlike what happened in the past (although at the end of the assembling process, due to cross-linking of the thermoplastic resin, a structure consisting of section members of thermosetting matrix is obtained) the assembling process does not actually contemplate connections of the traditional type requiring working operations for material removal or addition of connecting members.

In other words, the above described assembling method can be put into practice through use of pultruded section members having a thermoplastic matrix (of a polyurethane base, for example) that, once conveniently joined to each other, keep thermoplastic properties; alternatively pultruded section members may be used that have a plastic matrix with a thermoplastic behaviour (novolac phenolic resins, for example) that however can be cross-linked so as to take a thermosetting behaviour.

It should be noted that the assembling step and possibly the subsequent cross-linking of the section members preferably take place in a mould 12 or press in which, as briefly mentioned above, the section members 2, 3 have been suitably positioned. This mould 12, during the step of raising temperature T₁, may also carry out a thermoforming step of section members 2, 3 so that practically assembling and possible shaping according to the desired configurations of the section members to be mutually connected is achieved.

It will be understood that said thermoforming step which was described above as taking place concurrently with the assembling step, may at all events be carried out on the series of assembled section members also in a subsequent step, due to the thermoplastic properties given by the resin defining the matrices of the different section members. At all events this thermoforming step must take place prior to the cross-linking step designed to change the thermoplastic matrices into thermosetting matrices. In this connection it may be provided for example that in a first mould, connection of the different section members as described above is carried out, afterwards withdrawal from the moulds takes place as well as subsequent thermoforming of one or more portions of the assembly obtained by connection of the different section members, and ultimately a final cross-linking is executed which aims to give a thermosetting structure, if desired, to the matrices of the different section members. As pointed out at the beginning of the present disclosure and as illustrated in the drawings, the assembling process being the object of the invention can particularly apply to the manufacture of grating designed to define boundary structures and passages to be trod on for example or, more generally, netlike structures for any use.

In this case, a plurality of first and second section members 2, 3 are prepared by pultrusion and they are subsequently moved close to each other so as to define a grid-like arrangement. Practically, with reference to Figs. 2, 3 and 4, a series of first section members 2 parallel to each other is arranged transversely of a series of second section members 3 parallel to each other as well, to form a grid configuration in which a plurality of regions of mutual contact 10 between the different section members is provided. Then temperature is raised either in a localized manner at the mutual-contact regions 10 or in a general manner, within appropriate moulds 12 (see Fig. 3) until a temperature T₁ is reached at which change into the fluid state of the connecting portions of section members 2, 3 disposed at said mutual-contact regions 10 is obtained.

By bringing the connection portions 11 back to the solid state, welding of the different section members is obtained and consequently an assembled grid 1 is manufactured. For carrying out the above described process in an optimal manner, the section members of the first and second series 2, 3 are made of thermoplastic resin reinforced with fibres; as in this case, the thermoplastic resin used for manufacture of the section members can be preferably selected from novolac resins for example that are susceptible of conversion into thermosetting resins by cross-linking. If moulds such as those shown in Fig. 3 by way of example are used, the step of connecting by melting the contact portions of the different section members and the subsequent cross-linking step (by thermal rise to a temperature T₂ higher than the previously mentioned temperature T₁ for example) can be carried out within the same mould so that, when the process has been completed, the products drawn out of the moulds are assembled grids having a thermosetting matrix. Also in the case of manufacture of grid structures, prior to a cross-linking step, if any, a thermoforming step may be provided in which the shapes of the different contours forming the grid can be varied. With reference to the figures 5 to 7, concerning an alternative embodiment of the present invention, first and second section members 2, 3 differentiated from each other in their cross-section are provided to be made. In particular the first section members have an I-shaped cross-section in which an upper surface of the "I" is designed to define a surface to be trod on that can be possibly provided with surface working or unevennesses aiming at defining an antislip surface. The second section members 3, of non-circular shape, can take a square, pentagonal or hexagonal cross-section or, more generally, a polygonal cross-section. At predetermined intervals corresponding to the pitch according to which the first section members 2 must be spaced apart from each other in parallel, provision is made for grooves or reliefs reducing the cross-section of the second section members. Said second section members during the assembling step are inserted in parallel into through slots 13 the section of which matches the polygonal cross-section of the second section members. Once the second section members 13 have been suitably fitted into the respective slots 13 provided in the first section members 2 (should the first section members be bars of an I-shaped cross-section, as in Figs. 5, 6 and 7, the grooves will be formed in the core of said "I"), angular rotation (arrows "R" in Fig. 6) of the second section members is carried out so that the latter cannot be axially pulled out of the housings formed in the first section members. Practically, due to slots 12 formed in the second section members 3, by suitably inserting said second section members into the housings 13 provided in the first section members 2, a grid arrangement consisting of the first and second section members can be obtained. At this point, in order to fixedly fasten the first and second section members, a localized temperature rise can be carried out to bring the connecting portions, i.e. the mutual-contact regions 10 between the first and second section members, to the liquid or fluid state, thereby obtaining a fixedly connected grid. Possibly, subsequent cross-linking can be carried out if the grid having a plastic matrix of the thermoplastic type is wished to be changed into a grid having section members provided with a matrix of thermosetting resin.

If wished, prior to the cross-linking step a thermoforming step of the pultruded section members defining the grid can be carried out. This thermoforming step may concern a portion or all of the grid. For example, if an antislip feature is wished to be given to the upper surface of the I-shaped bars defining the first section members, it is possible to intervene thereon with a hot tool or within a mould prior to or after assembling, so as to plastically deform the typically smooth surface of the pultruded section member into a surface provided with roughness, ribs or others.

The above operation can be carried out both with reference to the grid shown in Figs. 2 to 4 and with reference to the grid obtained by the process shown in Figs. 5 to 7.

The invention achieves important advantages.

Firstly, it will be appreciated that by utilizing the thermoplastic properties of the pultruded section members an assembling process in particular for obtaining grid-like structures has been made available that is very efficient, of easy accomplishment and able to produce substantially monolithic products at very low costs. It will be also recognized that the process in reference possibly enables assembled pieces to be obtained, in particular grids, in which the constituent elements are pultruded section members having matrices of thermosetting plastic resin without however showing the typical drawbacks resulting from a traditional assembling of thermosetting section members. Herein use of glues and additional mechanical connection elements, as well as execution of heavy working operations for material removal, etc. are not required.

In addition, during the step of assembling the different section members still in a thermoplastic state, plastic deformations can be advantageously carried out on the section member so as to obtain possible particular shapes, surfaces provided with antislip working, etc.

Finally, as regards quality of the obtained product, assembled pieces and in particular grid-like structures can be obtained that are devoid of structural discontinuities and weakening effects, in which the fibres are at all events oriented in preferential directions and, also important, without an unaesthetic appearance.

## Claims

1. An assembling process of pultruded section members, in particular for production of grating, grids or nets, comprising the following steps:
- arranging at least one first and one second section members (2, 3) to be assembled, obtained by pultrusion, each of them having a matrix of plastic resin reinforced with fibres;
- moving said section members (2, 3) close to each other to define at least one mutual-contact region (10), **characterized in that** it further provides the following steps:
- causing a thermal rise to a temperature T₁ at least at said contact region (10) to bring to a fluid state the resin of a connection portion (11) of at least one of said section members (2, 3) having a matrix of plastic resin of the thermoplastic type;
- bringing back said at least one connecting portion (11) to a solid state to carry out welding and assembling between said pultruded section members (2, 3).

2. A process as claimed in claim 1, **characterized in that** the matrices of each of said section members (2, 3) are of thermoplastic resin and **in that** the assembling process involves a cross-linking step to change said matrices of thermoplastic resin into matrices of thermosetting plastic resin.

3. A process as claimed in claim 2, **characterized in that** said cross-linking step takes place after said thermal-rise step, preferably said cross-linking step occurring by thermal rise to a temperature T₂ higher than said temperature T₁.

4. A process as claimed in claim 3, **characterized in that** an appropriate cross-linking agent capable of intervening to cause a cross-linking action at said temperature T₂ higher than said temperature T₁ is associated with said plastic resin.

5. A process as claimed in claim 1, **characterized in that** said step of moving the section members close to each other and said thermal-rise step comprise the following sub-steps:
- setting at least one mould or press (12) so as to receive said section members (2, 3) to be assembled;
- disposing said section members (2, 3) within said mould or press so as to define said mutual-contact region;
- closing said at least one mould (12);
- thermally raising the temperature existing within said mould (12) until a temperature T₁ is reached at which at least one portion (11) of one of the section members (2; 3) at said mutual-contact region comes to a fluid condition;
- preferably carrying out a thermal reduction to obtain a new solidification of the resin in the fluid state thereby accomplishing an assembly between said pultruded section members;
- opening said at least one mould (12) to enable extraction of the assembled section members.

6. A process as claimed in claim 1, **characterized in that** after said thermal-rise step a cross-linking step is provided to convert the matrices of thermoplastic resin of said section member/members into corresponding matrices of thermosetting resin.

7. A process as claimed in claims 2 and 5, **characterized in that** said cross-linking step can be carried out prior to or after said opening step and said step of extracting the assembled section members from the moulds (12).

8. A process as claimed in claim 1, **characterized in that** it further comprises at least one step of thermoforming said pultruded section members, said thermoforming step taking place in particular concurrently with said thermal-rise step to temperature T₂ and preferably in said at least one mould.

9. A process as claimed in claim 1, **characterized in that** said matrix of said section members is made of plastic resins 7 comprising novolac phenolic resins.

10. A process for manufacture of grating and grids as claimed in claim 1 comprising the following steps:
- arranging a plurality of said first and second section members (2,3) obtained by pultrusion;
- moving said first and second pultruded section members (2, 3) close to each other in a grid-like arrangement in which a plurality of regions of mutual contact (10) between said section members is provided;
- causing thermal rise to temperature T₁ at least at the mutual-contact regions (10) of the section members to obtain a passage to the fluid state of respective connecting portions (11) of said section members having matrices of thermoplastic resin;
- bringing back said connecting portions (11) to the solid state to carry out welding between said first and second section members (2, 3), thereby obtaining an assembled grid.

11. A process as claimed in claim 10, **characterized in that** both the first and second pultruded section members (2, 3) are made of thermoplastic resin reinforced with fibres.

12. A process as claimed in claim 11, **characterized in that** the thermoplastic resin of the first and preferably also the second section members is susceptible of cross-linking, a step of cross-linking the matrices of said first and second section members being provided after said thermal-rise step so as to obtain corresponding section members having matrices of thermosetting plastic resin.

13. A process as claimed in claim 10, **characterized in that** said step of moving the first and second section members (2, 3) close to each other and said thermal-rise step are carried out in appropriate moulds or presses (12) from which the section members are extracted after a condition of mutual assembly and welding has been reached, so as to define a grid-like structure.

14. A process as claimed in claim 13, **characterized in that** a thermoforming step is provided in order to at least partly vary the shape of said section members (2, 3), which step is preferably carried out within said moulds (12) concurrently with said step of raising the temperature to temperature T₁.

15. Grating, net or grid comprising first and second pultruded section members (2, 3) transversely assembled with each other by a process as described in anyone of claims 1 to 20.
